# FASCICULE DE BREVET EUROPEEN

(11) **EP 0 507 680 B1**
(45) Date de publication et mention de la délivrance du brevet: **13.09.1995**
(21) Numéro de dépôt: 92400914.5
(22) Date de dépôt: 01.04.1992
(51) Int. Cl.: F16L 11/12

(54) **Procédé de réalisation en continu d'une structure tubulaire souple comportant un feuil monocouche d'épaisseur micrométrique incorporé et structures tubulaires souples réalisées selon ce procédé**
Verfahren zur kontinuierlichen Herstellung einer elastischen rohrförmigen Struktur mit einer integrierten einlagigen Schicht in Mikrostärke sowie elastische rohrförmige Strukturen, die nach diesem Verfahren hergestellt sind
Process for continually manufacturing tubular shaped elastic structures having incorporated a single layered lining of micrometric wallthickness and tubular shaped elastic structures manufactured according to this process

(30) Priorité: 05.04.1991 FR 9104154
(43) Date de publication de la demande: 07.10.1992
(73) Titulaire: CAOUTCHOUC MANUFACTURE ET PLASTIQUES, F-78000 Versailles (FR)
(72) Inventeur: Derroire, Georges, F-63200 Riom (FR); Ragout, Bernard, F-63170 Aubierre (FR)
(74) Mandataire: Peuscet, Jacques

(56) Documents cités:
- EP-A- 0 051 139
- EP-A- 0 099 220
- EP-A- 0 222 323
- WO-A-87/00147
- WO-A-91/04432
- CH-A- 674 763
- US-A- 4 643 927

## Description

L'invention concerne les structures tubulaires souples à base d'élastomères renforcés ou non, servant au transport de fluides liquides, gazeux ou pulvérulents, et leur procédé de fabrication, comprenant la pose d'un film d'épaisseur micrométrique servant de barrière d'étanchéité pour assurer l'imperméabilité aux fluides transportés.

Les structures tubulaires souples de transport de fluides sont le plus souvent fabriquées en grande longueur par des procédés d'extrusions successives alternées avec la constitution des couches de renforcement textile, ou éventuellement métallique, par les procédés de tricotage, guipage de retors ou tressage, usuels dans l'industrie des polymères, aussi bien thermoréticulables que thermoplastiques. Un secteur important de cette industrie emploie des procédés de fabrication utilisant une réticulation par traitement thermique de l'ensemble des constituants polymériques du tuyau, transformation irréversible qui lie des polymères de natures éventuellement différentes grâce à leur affinité chimique.

En service, les pressions des fluides véhiculés, ainsi que les sollicitations dynamiques exercées, déterminent le choix des éléments de renforcement, tandis que l'agressivité chimique ou thermique du fluide et l'environnement extérieur déterminent le choix des matériaux polymériques constituant le tube et le revêtement.

Le domaine concerné est plus précisément celui des tuyaux de petits diamètres, de l'ordre du centimètre, affectés au transfert soit des carburants automobiles modernes - dits oxygénés - à taux d'alcools incorporés, soit des fluides biphasés dans les systèmes réfrigérants. Le liquide véhiculé se comporte comme solvant facilement absorbé par les matériaux usuels constituants des tubes internes des tuyaux. Les cahiers des charges - par exemple des constructeurs automobiles - définissent pour de tels tuyaux une perméabilité très faible, de l'ordre de quelques grammes par heure et par mètre carré.

Les tubes internes en élastomères courants ou spéciaux, tels que ceux à base de nitrile, présentent des perméabilités dix fois supérieures à celles recherchées.

Des fabricants de tuyaux ont ainsi apporté des perfectionnements à la construction traditionnelle issue de l'extrusion. Le principe en est décrit dans le document CA 951 259 de GOODALL RUBBER COMPANY, qui, en niant la nécessité d'une adhérence entre constituants, propose de former un film barrière par immersion du tuyau dans un bain de solvant vaporisable. Ce document propose une amélioration de la non-perméabilité aux gaz de pétrole liquéfié (GPL) d'un tube en mélange polyéthylène - butyle par l'utilisation d'un film de polyester.

Ledit film n'est utilisé que pour protéger le renforcement textile, alors externe, sans qu'il soit cherché de liaison entre les constituants.

De même, le document JP-1 152 061 de TOKAI RUBBER INDUSTRY propose d'appliquer la fonction barrière au transport de fluides réfrigérants dans des tubes en caoutchouc halogéné par interposition d'une couche mince de polychlorure de vinylidène protégeant le renforcement par fibres courtes de la couche intermédiaire.

Ce document applique le principe des protections par couches plastiques multiples aux procédés de fabrication traditionnels par extrusion.

Le document JP-1 306 239, de TOKAI RUBBER INDUSTRY également, prévoit un tube de résine polyamide protégé par un mélange de cette résine avec un copolymère de type EVA, sans indications particulières sur la technologie de mise en oeuvre de ces protections monocouches.

Au contraire, le document JP-1 259 944 de KURARAY indique un procédé de fabrication par enroulement spiralé de films minces autour d'un tube de transport de propane ou de fluides de conditionnement d'air, les films pouvant être en copolymères d'éthylène et d'alcool polyvinylique (EVOH) ou en polyéthylène téréphtalate (PET). Le document porte sur les rapports dimensionnels des rubans constituant ces films, et le taux de leur recouvrement, sans s'intéresser à la liaison entre les composants.

Comme le précédent, le document WO-A-91 04432 de PAGUAG propose un tuyau comportant une couche interne enroulée de façon hélicoïdale. Il s'agit, dans l'invention, d'une feuille fine de plastique fluoré. Pour assurer la liaison des lés de la couche en plastique fluoré et des couches adhésives qui l'entourent, il est procédé à un premier traitement thermique à la température de fusion du plastique, un deuxième traitement thermique venant, ultérieurement, assurer la vulcanisation des élastomères constitutif et la liaison des différents constituants entre eux. Cette réalisation nécessite donc l'emploi de couches adhésives, la barrière n'étant pas scellable sur elle-même, et deux traitements thermiques. Le document US-A-4 643 927 de DOW CHEMICAL décrit un film multicouche, de forme tubulaire, comportant un élément barrière interne, multicouche comme celui proposé par le document précédent, car constitué de la barrière elle-même et de des couches adhésives situées de part et d'autre. Pare contre, ledit élément barrière est disposé longitudinalement mais il n'est pas scellable sur lui-même et nécessite, pour sa fermeture sous forme de tube une forte largeur de recouvrement des lés, de plus de mille fois son épaisseur.

Enfin, le document US 3 927 695 de UNION CARBIDE applique le perfectionnement d'un film barrière à un tube en élastomère de silicone réticulé par vulcanisation à l'air chaud et supporté, lors de sa confection, par un mandrin. La superposition des renforcements est assurée par enroulements spiralés et l'étanchéité est achevée par spiralage d'un film de polyéthylène téréphtalate.

Ce film est rendu adhésif et utilisable sur des machines d'enroulement à grande vitesse par revêtement superficiel au moyen d'un mélange d'une triazine oléfinique et de caoutchouc, dont le traitement thermique ultérieur permet la liaison entre le tube de silicone et le film de polyéthylène téréphtalate, normalement non adhérents.

Diverses variantes sont proposées pour combiner le film barrière de polyéthylène téréphtalate, revêtu d'un mélange de siloxane et de triazine, à des tubes en élastomère de silicone, constitués, dans tous les cas, par des superpositions d'enroulements spiralés de couches calandrées. La constitution de tels tuyaux est réalisée sur un mandrin rigide, tournant, permettant la fabrication, à grande vitesse en ce qui concerne l'opération d'enrubannage. L'opération présente l'inconvénient d'être discontinue et de ne porter que sur une longueur limitée, pour tous les exemples cités dans ledit document.

Les documents précédents décrivent donc différentes solutions incorporant, dans des tuyaux, des films quasi-imperméables aux fluides véhiculés, mais aucune des solutions proposées ne permettrait d'atteindre les valeurs actuelles des cahiers des charges en vigueur - particulièrement dans l'industrie automobile - et ce, en raison, soit de l'absence d'adhérence intime entre les constituants qui laisse place à la diffusion des fluides entre lesdits constituants ou à un "effet mêche" du renforcement, facilitant la pénétration du fluide, dès que le tube interne présente la moindre porosité, soit à une efficacité modérée des films utilisés comme élément barrière, qui nécessite une épaisseur non négligeable.

De plus, l'examen de l'art antérieur montre que, si le principe de constitution d'un film barrière au sein des constituants d'un tuyau souple est bien posé, par contre, une technique de fabrication en continu, ne nécessitant pas la fabrication discontinue d'une ébauche, mais qui assure une adhérence intime des constituants n'est pas connue.

L'invention concerne non seulement la réalisation de tuyaux souples mais également celle de toute structure tubulaire souple, telle que, à titre d'exemple non limitatif, les compensateurs de dilatation ou les câbles électriques gainés, devant présenter une étanchéité soit aux fluides véhiculés soit aux agressions extérieures, telles celles de l'oxygène ou de l'ozone.

L'objet de l'invention est un procédé de fabrication en continu, associé aux procédés usuels de l'industrie des polymères, permettant l'incorporation dans une structure tubulaire souple et la liaison intime aux autres constituants, au cours de la fabrication, d'un feuil monocouche, d'épaisseur micrométrique formant barrière de perméabilité aux fluides véhiculés, ledit feuil monocouche d'épaisseur micrométrique étant constitué d'un feuil barrière de matériau polymérique un très faible indice de perméabilité et présentant une affinité pour les constituants en regard, afin que s'établisse une liaison physico-chimique intime entre tous les constituants de la structure tubulaire souple.

L'invention porte également sur la structure tubulaire souple réalisée selon ledit procédé.

L'invention est donc un procédé de réalisation d'une structure tubulaire souple constituée d'un tube interne, éventuellement d'une armature de renforcement et d'un revêtement extérieur et qui comporte, en outre, une barrière d'étanchéité soit aux fluides véhiculés soit aux agents agressifs extérieurs, ladite barrière d'étanchéité étant constituée d'un feuil monocouche d'épaisseur micrométrique comprise entre 10 et 40 micromètres, polymérique, et disposée longitudinalement, de manière continue, sous forme de ruban, pour former un enveloppage dont le recouvrement des lés est parallèle aux génératrices de ladite structure tubulaire souple, ledit feuil monocouche d'épaisseur micrométrique étant scellable sur lui-même, sa fermeture étant assurée par la superposition étanche de ses faces sur la surface dudit recouvrement, et ledit recouvrement des lés se faisant sur une longueur circonférentielle au plus égale à la valeur du diamètre nominal de ladite structure tubulaire souple et sensiblement égale à cinq cents fois l'épaisseur dudit feuil monocouche d'épaisseur micrométrique, un traitement thermique final, unique, venant assurer la liaison intime de tous les éléments constitutifs de ladite structure tubulaire souple.

Le feuil monocouche d'épaisseur micrométrique est constitué d'un feuil barrière, destiné à assurer non seulement la fonction étanchéité mais également la liaison avec les éléments de la structure tubulaire souple avec lesquels il est en contact. L'invention porte également sur les structures tubulaires souples, telles que les tubes, les tuyaux, les gaines ou les compensateurs de dilatation, comportant une barrière d'étanchéité aux fluides véhiculés ou aux agents agressifs extérieurs, réalisées selon le procédé objet de l'invention.

La nature du feuil monocouche d'épaisseur micrométrique est fonction de celle du fluide véhiculé ou de l'agent agressif extérieur. En général, par exemple, les feuils présentant une bonne imperméabilité à la vapeur d'eau sont assez perméables aux gaz, à l'exception du polychlorure de vinylidène présentant, lui, une excellente perméabilité aux deux.

Les polymères les plus efficaces pour leurs propriétés de barrière sont, pour l'imperméabilité aux gaz, les polymères de chloroéthylène, le polyéthylène téréphtalate, les copolymères éthylène/alcool polyvinylique, les polyamides ou copolyamides, alors que pour l'imperméabilité à la vapeur d'eau, ce sont, outre le polychlorure de vinylidène et le polyéthylène téréphtalate, le polychlorotrifluoroéthylène, le polypropylène orienté, les polyoléfines haute et basse densités; l'imperméabilité aux hydrocarbures en général et, plus particulièrement aux hydrocarbures modernes est encore plus difficile à assurer. Parmi les polymères offrant les meilleures propriétés de barrière, peuvent être cités les polyamides 11 et 12, le polyéthylène réticulable et le polyéthylène téréphtalate.

Le feuil monocouche d'épaisseur micrométrique doit également présenter des qualités d'affinité - après traitement approprié - aux composants des éléments constitutifs de la structure tubulaire souple avec lesquels il se trouve en contact et il doit, en outre, être scellable sur lui-même. Les particularités de l'invention, ainsi que ses variantes, seront mieux comprises à la lecture de la description accompagnant les dessins, dans lesquels :
- la figure 1 représente la coupe d'une structure tubulaire souple réalisée selon le procédé objet de l'invention ;
- la figure 2 illustre la constitution de deux articles tubulaires souples, un tube et un tuyau, comportant une barrière d'étanchéité intégrée ;
- la figure 3 représente la coupe d'un compensateur de dilatation comportant une barrière d'étanchéité au contact du fluide véhiculé.

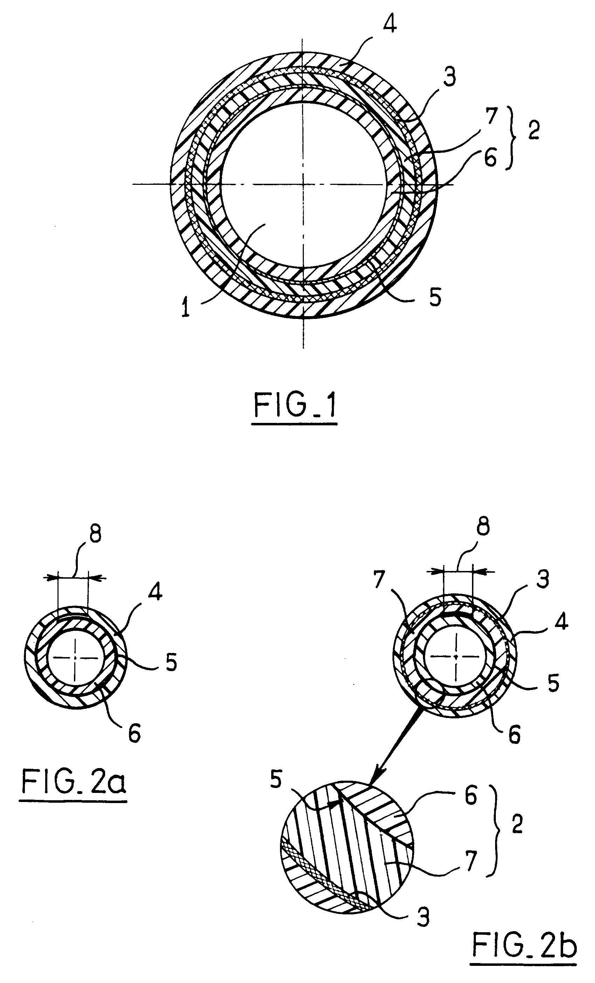

La figure 1 représente la coupe d'une structure tubulaire souple réalisée selon le procédé objet de l'invention.

La zone de transfert du fluide (1) est définie par le diamètre interne de la structure tubulaire souple et est confinée par le tube interne (2). La résistance à la pression est assurée par l'armature de renforcement (3), posée par tricotage, guipage ou tressage au-dessus du tube interne (2), réalisé par extrusion, et elle est protégée, contre les agressions externes, par le revêtement (4).

Cependant, la porosité du matériau élastomérique constituant usuellement le tube interne (2) laisse au fluide véhiculé la latitude d'atteindre par migration, interne audit matériau élastomérique, l'armature de renforcement (3) pour y provoquer différents dégats : à la fois une détérioration des caractéristiques mécaniques du matériau de renforcement, une perte des performances intrinsèques de la structure tubulaire souple elle-même par désolidarisation entre constituants, ou encore une imprégnation du revêtement (4), au point de provoquer odeurs et pollution de l'environnement, ou même risque d'inflammation pour un carburant. En vue de remédier à l'ensemble de ces insuffisances et de ces risques, une barrière d'étanchéité (5) est interposée entre la paroi intérieure et l'armature de renforcement (3) de la structure tubulaire souple.

La barrière d'étanchéité (5) est représentée incorporée, par exemple à mi-épaisseur, au sein du tube interne (2), le séparant ainsi en une couche au contact du fluide véhiculé, formant une robe intérieure (6) et, autour de la barrière d'étanchéité (5), en une autre couche, dite tube de liaison (7), parfaitement protégée de toute imprégnation par le fluide véhiculé. Ledit tube de liaison (7) assure la liaison mécanique entre le tube interne (2) et l'armature de renforcement (3). Ainsi représentée, la construction de la structure tubulaire souple suppose autant d'extrusions que de couches successives réalisées au moyen d'extrudeuses adaptées, déposant une couche supplémentaire sur l'ébauche de grande longueur réalisée au stade antérieur. L'ébauche, à chaque stade, est portée ou sur une succession de tringles rigides ou sur un mandrin souple ou encore sur un simple tube suffisamment rigidifié pour accepter les extrusions ultérieures. La robe intérieure (6) peut éventuellement être réduite au simple feuil monocouche d'épaisseur micrométrique constituant la barrière d'étanchéité (5), qui doit être intimement liée, par adhérisation au cours du traitement thermique, aux matériaux polymériques du tube de liaison (7) et de ladite robe intermédiaire (6).

La même liaison mécanique, obtenue par voie physico-chimique, sous l'effet de l'apport de chaleur, est nécessaire pour la cohésion entre ledit tube de liaison (7) et le revêtement (4), à travers la constitution textile de l'armature de renforcement (3). Si celle-ci est constituée de plusieurs épaisseurs, par exemple de deux couches guipées enroulées hélicoïdalement en sens opposés, une couche de liaison (non représentée), présentant de bonnes qualités mécaniques, peut être interposée entre lesdites couches de l'armature de renforcement (3). Le polymère de base de ladite couche de liaison (7) doit alors, nécessairement, être protégé de toute migration du fluide véhiculé à travers le tube interne (2), justifiant encore plus, ainsi, le rôle du feuil monocouche d'épaisseur micrométrique assurant la fonction barrière d'étanchéité (5).

La figure 2 est formée de deux schémas exposant la constitution de deux articles tubulaires souples à barrière d'étanchéité intégrée : en vue 2a un tube, c'est à dire un tuyau dépourvu d'armature de renforcement, en vue 2b un tuyau souple comportant, donc, une armature de renforcement (3), par exemple textile.

Les deux types d'articles sont constitués, au contact du fluide véhiculé, par une robe intérieure (6), qui peut être réalisée, à titre d'exemple non limitatif, en une composition polymérique à base d'un mélange de caoutchouc nitrile et de polychlorure de vinyle. La barrière d'étanchéité (5) est réalisée par enveloppage, avec un recouvrement des lés (8) d'une longueur circonférentielle au plus égale à la valeur du diamètre nominal.

A titre d'exemple non limitatif, et en raison du fait que ladite barrière d'étanchéité (5) est, ici, intégrée au tube interne (2), le feuil monocouche d'épaisseur micrométrique qui la constitue est avantageusement composé de polyéthylène téréphtalate, de chlorure de polyvinyle ou de chlorure de polyvinylidène -, matériaux capables, après traitement éventuel, de se souder sur eux-mêmes dans la zone de recouvrement des lés (8) après avoir reçu la couche extrudée ultérieurement constituant le tube de liaison (7) ou le revêtement (4).

Les épaisseurs relatives du feuil monocouche d'épaisseur micrométrique d'une part et de la robe intérieure (6) et du tube de liaison (7) entre lesquels il est inséré, d'autre part, ont pour effet de compenser les différences notables de modules élastiques desdits composants dans les déformations, en service, de la structure tubulaire souple. Grâce à la parfaite adhérence entre le feuil monocouche d'épaisseur micrométrique et les matériaux de module de déformation beaucoup plus faible qui l'entourent, la barrière d'étanchéité (5) a la possibilité de se plisser ou de former des ondulations pour suivre, sans risque, les déformations subies, au cours de son utilisation, par ladite structure tubulaire souple.

Dans un exemple non limitatif, le feuil monocouche d'épaisseur micrométrique présente une épaisseur de 15 micromètres.

Le recouvrement des lés (8) est de 8 à 10 millimètres et les épaisseurs du tube interne (2) et du revêtement (4) de 3 millimètres pour un diamètre de passage du fluide véhiculé de 12 millimètres.

Dans cet exemple dimensionnel, le feuil monocouche d'épaisseur micrométrique est utilisé en ruban de largeur 45 millimètres posé longitudinalement.

Il reçoit éventuellement un traitement physique et/ou chimique de préparation pour assurer son adhérence avec les constituants en regard de la structure tubulaire souple.

Une aptitude particulière du polychlorure de vinylidène est d'assurer une adhésion parfaite sur d'autres polymères, tels que le caoutchouc nitrile ou nitrile hydrogéné, les mélanges de caoutchouc nitrile et de polychlorure de vinyle, par exemple, au cours d'un traitement thermique aux environs de 140 à 180°C. Outre cette affinité aux polymères voisins, le polychlorure de vinylidène présente, à ces températures, la faculté de se sceller sur lui-même, ce qui permet la réalisation d'un enveloppage continu, avec recouvrement de section droite constante.

Le recouvrement des lés (8) se fait sur une largeur de l'ordre de 500 fois l'épaisseur du feuil monocouche d'épaisseur micrométrique.

La liaison intime avec les polymères du tube interne (2) qui l'entourent, autorise, par le module de déformation plus bas desdits composants, les flexions mécaniques de la structure tubulaire souple sur les rayons usuels.

L'aplatissement, en service, de la structure tubulaire souple est évité du fait de l'épaisseur notable des polymères constitutifs du tube interne (2).

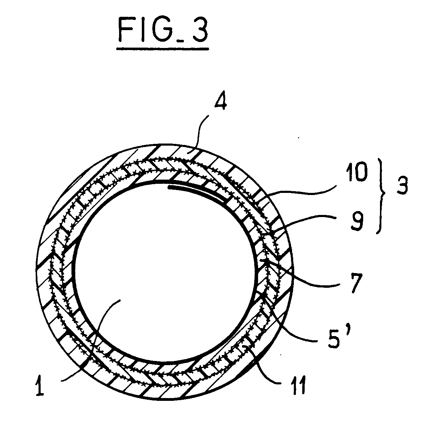

Dans les déformations locales, en service, la liaison intime due à l'adhérisation est indispensable pour éviter la désolidarisation entre composants de déformabilité différente, désolidarisation qui pourrait se traduire par des cheminements longitudinaux du fluide véhiculé à partir d'un défaut local, jusqu'à atteindre l'armature de renforcement (3) ou le revêtement (4) par porosité audelà du point faible. La figure 3 est la coupe d'une structure tubulaire souple telle que la partie cylindrique d'un manchon compensateur de dilatation pour canalisations industrielles, entre ses brides de fixation rigides.

La résistance dudit manchon compensateur de dilatation à la pression de l'installation est assurée par une pluralité de couches d'armatures de renforcement (3), par exemple textiles, représentées, ici, au nombre de deux. Une couche intérieure (9), en contact intime avec le tube de liaison (7) et une couche extérieure (10), en contact intime également avec le revêtement (4), sont reliées mécaniquement par une gomme de liaison (11), dont l'adhérence à travers ces couches d'armatures de renforcement (3) aux polymères qui les entourent est garante de la cohésion de l'ensemble, après traitement thermique. L'étanchéité de haut niveau est ici assurée par la présence, à la partie interne dudit manchon compensateur de dilatation, d'une barrière d'étanchéité (5′), intimement liée au tube de liaison (7), ici disposée au contact du fluide transporté.

A titre d'exemple non limitatif, le feuil monocouche d'épaisseur micrométrique fermant barrière d'étanchéité (5′) peut être réalisé en polyéthylène de haute densité.

Une préparation physico-chimique permet, en effet, la réalisation d'une liaison intime entre le polyéthylène de haute densité et la composition polymérique du tube de liaison (7).

Le fluide véhiculé n'est ainsi en contact qu'avec le matériau du feuil monocouche d'épaisseur micrométrique formant barrière d'étanchéité (5′), et l'adhérence intime avec le polymère du tube de liaison (7) permet les déformations mécaniques de l'ensemble de la structure tubulaire souple servant, par exemple, de manchon compensateur de dilatation entre éléments rigides de canalisations industrielles.

A titre d'illustration, sont donnés ci-après quelques ordres de grandeur des perméabilités que présentent les feuils barrières, selon la nature de l'agent auquel le feuil monocouche d'épaisseur micrométrique doit assurer l'étanchéité. Parmi les polymères de chloroéthylène, le polychlorure de vinylidène présente la meilleure imperméabilité aux gaz et, plus particulièrement à l'oxygène, pour lequel, à température ambiante et 0 % d'humidité relative, sa perméabilité est de 2 à 25 centimètres cube par mètre carré de surface, l'épaisseur étant ramenée à 1 micromètre et sous une différentielle de pression de 1 bar.

Dans les mêmes conditions, la perméabilité aux gaz d'un feuil de copolymère d'éthylène et d'alcool vinylique est de l'ordre de 4 à 60 centimètres cube, celle du polyéthylène téréphtalate étant de l'ordre de 1500 centimètres cube et celle du polyamide 6 d'environ 2000 centimètres cube.

La perméabilité à la vapeur d'eau, mesurée à 40 °C et 90 % d'humidité relative, pour un micromètre d'épaisseur et par mètre carré de surface du feuil est, au plus, de 80 grammes pour les polymères de chloroéthylène dont le polychlorure de vinylidène, de 15 grammes environ pour le polychlorotrifluoroéthylène et compris entre 150 et 600 grammes, dans les mêmes conditions, pour les polyoléfines.

Mesurée selon les conditions des cahiers des charges des constructeurs d'automobiles, la perméabilité aux hydrocarbures présente les valeurs expérimentales suivantes, exprimées en grammes par heure et par mètre carré de feuil : 0,15 gramme pour un feuil de polyéthylène téréphtalate d'une épaisseur de 12 micromètres, 1 gramme pour un feuil de polyamide-11 de 400 micromètres d'épaisseur (alors que cette valeur est de 1,6 grammes pour un feuil de polyamide-12 de 320 micromètres d'épaisseur) et elle est de 58 grammes pour un feuil de polyéthylène réticulé de 100 micromètres d'épaisseur.

A titre d'exemples préférentiels les polymères constitutifs du feuil monocouche d'épaisseur micrométrique, sont choisis, en fonction des applications, parmi les polymères suivants :
le polyéthylène téréphtalate,
le polypropylène,
le polypropylène orienté,
le polyéthylène basse ou haute densité,
les copolymères éthylène/acétate de vinyle,
les polyamides, 6, 11 ou 12,
le polychlorure de vinyle,
le polychlorure de vinylidène,
ou les copolymères éthylène/alcool vinylique.

La mise en oeuvre du feuil monocouche d'épaisseur micrométrique, pour former la barrière d'étanchéité (5) sur une structure tubulaire souple dont la fabrication est par ailleurs classique, vient s'interposer, après l'éventuelle constitution d'une robe intérieure (6) sur un mandrin rigide ou souple, par exemple par extrusion suivie d'un refroidissement.

Un guide conique fait passer le feuil monocouche d'épaisseur micrométrique de la forme plane à la forme cylindrique enveloppant, en continu, l'ébauche de la structure tubulaire souple, avec une progressivité de l'angle suffisante pour éviter toute déformation. Un freinage contrôlé de la bobine portant ce feuil monocouche d'épaisseur micrométrique est le paramètre essentiel asservissant le déroulement de la bobine à la vitesse de défilement de la structure tubulaire souple en cours de confection. Le recouvrement des lés (8) est nécessaire et se trouve confiné par l'entrée ultérieure de l'ébauche continue dans une extrudeuse qui pose le tube de liaison (7), sous une pression élevée, lors de la traversée de la tête d'extrusion. Après tricotage, tressage ou guipage hélicoïdal des couches de l'armature de renforcement (3), l'ébauche intermédiaire ainsi constituée de la structure tubulaire souple reçoit le revêtement (4) selon un procédé semblable.

Suivant le type de support servant éventuellement de mandrin, l'ébauche de la structure tubulaire souple est, alors, ou coupée à la longueur des tiges servant de mandrins rigides et conformée, ou enroulée grâce à l'emploi d'un mandrin flexible sur des bobines, afin d'être introduite, pour traitement thermique, dans un autoclave de dimensions appropriées, ou encore soumise au traitement thermique, de manière continue, par exemple par passage dans un bain de sel ou dans un tunnel à haute fréquence.

En résumé, le procédé objet de l'invention comprend, pour la réalisation de la structure tubulaire souple représentée, les étapes successives suivantes :
- extrusion de la robe intérieure (6), généralement sur un mandrin ;
- pose du feuil monocouche d'épaisseur micrométrique avec recouvrement des lés (8) parallèle à l'axe de la robe intérieure (6) ;
- extrusion du tube de liaison (7), au dessus du film monocouche d'épaisseur micrométrique ;
- tricotage, guipage ou tressage de la première couche de l'armature de renforcement (3), par une tricoteuse, une guipeuse ou une tresseuse, au dessus du tube de liaison (7) ;
- dépôt éventuel, par pulvérisation par exemple, d'un agent d'adhérisation sur la première couche de l'armature de renforcement (3) ;
- tricotage, guipage ou tressage éventuel de la deuxième couche de l'armature de renforcement (3) au dessus de la couche formée par l'agent d'adhérisation ;
- extrusion du revêtement (4) au dessus de l'armature de renforcement (3) ;
- traitement thermique final sous pression destiné à assurer la liaison intime de l'ensemble des éléments constitutifs de la structure tubulaire souple, robe intérieure (6), feuil monocouche d'épaisseur micrométrique formant la barrière d'étanchéité (5), tube de liaison (7), armature de renforcement (3) et son agent d'adhérisation et revêtement (4);
- détringlage de la structure tubulaire souple, après son refroidissement.

Tous ces procédés ont en commun la mise en oeuvre de techniques opérant en continu, sur des longueurs se comptant en centaines de mètres, les composants devant se présenter à l'assemblage de façon ininterrompue.

Le procédé de réalisation d'une structure tubulaire souple à barrière d'étanchéité incorporée, selon l'invention, présente les avantages suivants :
- il s'intègre aisément dans une fabrication classique, par incorporation d'un poste de pose du feuil monocouche d'épaisseur micrométrique formant barrière d'étanchéité, sans modifier les techniques permettant de réaliser, sur les mêmes moyens, d'autres types de structures tubulaires souples ;
- il permet, par simple changement de constitution du feuil monocouche d'épaisseur micrométrique, de satisfaire éventuellement des cahiers des charges différents pour des applications véhiculant des fluides différents ou pour assurer une protection contre les agents agressifs externes ;
- il permet le choix d'armatures de renforcement indépendemment de leur compatibilité avec les fluides transportés ;
- il reporte, de manière économique, sur le feuil monocouche d'épaisseur micrométrique, la fonction étanchéité jusqu'alors exigée du matériau constitutif du tube interne de la structure tubulaire souple ;
- il est compatible avec des procédés de conformage sur mandrins souples donnant des formes non rectilignes après traitement thermique des ébauches.

L'homme de l'art peut appliquer le procédé de réalisation de structures tubulaires souples à barrière d'étanchéité incorporée et ses variantes ainsi que les variantes de constitution du feuil monocouche d'épaisseur micrométrique, à différents articles produits en continu, sans sortir du cadre de l'invention.

## Revendications

1. Procédé de réalisation d'une structure tubulaire souple composée d'un tube interne (2), éventuellement d'une armature de renforcement (3) et d'un revêtement (4) et comportant, en outre, une barrière d'étanchéité (5), (5') aux fluides véhiculés ou aux agents agressifs extérieurs, ladite barrière d'étanchéité (5), (5'), étant constituée d'un feuil monocouche d'épaisseur micrométrique comprise entre 10 et 40 micromètres, polymérique, et disposée longitudinalement, de manière continue, sous forme de ruban, pour former un enveloppage dont le recouvrement des lés (8) est parallèle aux génératrices de ladite structure tubulaire souple, ledit feuil monocouche d'épaisseur micrométrique étant scellable sur lui-même, sa fermeture étant assurée par la superposition étanche de ses faces sur la surface dudit recouvrement, et ledit recouvrement des lés (8) se faisant sur une longueur circonférentielle au plus égale à la valeur du diamètre nominal de ladite structure tubulaire souple et sensiblement égale à cinq cents fois l'épaisseur dudit feuil monocouche d'épaisseur micrométrique, un traitement thermique final, unique, venant assurer la liaison intime de tous les éléments constitutifs de ladite structure tubulaire souple.

2. Procédé de réalisation d'une structure tubulaire souple selon la revendication 1, caractérisé en ce que ledit feuil monocouche d'épaisseur micrométrique formant la barrière d'étanchéité (5') est disposé, en continu, sur la surface libre du tube interne (2), constituant, de ce fait, la robe intérieure de ladite structure tubulaire souple.

3. Procédé de réalisation d'une structure tubulaire souple selon la revendication 1, caractérisé en ce que ledit feuil monocouche d'épaisseur micrométrique est disposé, en continu, entre une robe intérieure (6) et un tube de liaison (7), dont l'ensemble constitue le tube interne (2).

4. Procédé de réalisation d'une structure tubulaire souple selon la revendication 3, caractérisé en ce que la robe intérieure (6) et le tube de liaison (7) ont sensiblement la même épaisseur, le feuil monocouche d'épaisseur micrométrique étant disposé au voisinage de la demi-épaisseur du tube interne (2).

5. Structure tubulaire souple réalisée conformément au procédé selon l'une des revendications 1 à 4, caractérisé en ce que le feuil monocouche d'épaisseur micrométrique formant la barrière d'étanchéité (5), (5') est constitué de polyéthylène téréphtalate.

6. Structure tubulaire souple réalisée conformément au procédé selon l'une des revendications 1 à 4, caractérisé en ce que le feuil monocouche d'épaisseur micrométrique formant la barrière d'étanchéité (5), (5') est constitué d'un polymère de chloroéthylène tel que du polychlorure de vinyle.

7. Tuyau souple pour transport de fluides liquides ou gazeux comportant une barrière d'étanchéité (5) ou (5'), constituée d'un feuil monocouche d'épaisseur micrométrique, polymérique, caractérisé en ce que ledit tuyau souple présente une structure conforme à l'une des revendications 5 ou 6.

8. Manchon compensateur de dilatation pour canalisations industrielles comportant une barrière d'étanchéité (5) ou (5'), constituée d'un feuil monocouche d'épaisseur micrométrique, polymérique, caractérisé en ce que ledit manchon compensateur de dilatation présente une structure conforme à l'une des revendications 5 ou 6.

## Claims

1. A process for producing a flexible tubular structure composed of an inner tube (2), optionally a reinforcement (3) and a covering (4) and further comprising a sealing barrier (5), (5') to the fluids conveyed or to external aggressive agents, said sealing barrier (5), (5') being constituted by a single-layer polymeric film of micrometric thickness comprised between 10 and 40 microns, arranged longitudinally and continuously, in the form of a ribbon, to form a wrapper, the overlapping of the breadths (8) of which is parallel to the generating lines of said flexible tubular structure, said single-layer film of micrometric thickness being self-sealing, being closed by the impermeable superimposition of its faces over the surface area of said overlap, and said overlapping of the breadths (8) taking place over a circumferential length equal at most to the value of the nominal diameter of said flexible tubular structure and substantially equal to five hundred times the thickness of said single-layer film of micrometric thickness, a single final heat treatment ensuring the intimate connection of all the constituent elements of said flexible tubular structure.

2. A process for producing a flexible tubular structure according to Claim 1 characterised in that said single-layer film of micrometric thickness forming the sealing barrier (5') is disposed continuously over the free surface of the inner tube (2), hence constituting the inner covering of said flexible tubular structure.

3. A process for producing a flexible tubular structure according to Claim 1, characterised in that said single-layer film of micrometric thickness is disposed continuously between an inner covering (6) and a connecting tube (7), which together form the inner tube (2).

4. A process for producing a flexible tubular structure according to Claim 3, characterised in that the inner covering (6) and the connecting tube (7) have substantially the same thickness, the single-layer film of micrometric thickness being disposed in the vicinity of the half-thickness of the inner tube (2).

5. A flexible tubular structure produced in accordance with the process according to one of Claims 1 to 4, characterised in that the single-layer film of micrometric thickness forming the sealing barrier (5), (5') consists of polyethylene terephthalate

6. A flexible tubular structure produced in accordance with the process according to one of Claims 1 to 4, characterised in that the single-layer film of micrometric thickness forming the sealing barrier (5), (5') consists of a chloroethylene polymer such as polyvinyl chloride.

7. A flexible tube for conveying liquid or gaseous fluids comprising a sealing barrier (5) or (5'), constituted by a single-layer polymeric film of micrometric thickness, characterised in that said flexible tube has a structure in accordance with one of Claims 5 or 6.

8. A compensating expansion sleeve for industrial pipelines comprising a sealing barrier (5) or (5'), constituted by a single-layer polymeric film of micrometric thickness, characterised in that said compensating expansion sleeve has a structure in accordance with one of Claims 5 or 6.

## Patentansprüche

1. Verfahren zur Herstellung einer weichen, rohrförmigen Struktur, welche aus einem Innenrohr (2), gegebenenfalls einer Verstärkungsarmierung (3) und einer Ummantelung (4) zusammengesetzt ist und welche darüber hinaus eine Dichtungsbarriere (5), (5') gegen beförderte Fluids oder gegen äußere, aggressive Substanzen umfaßt, welche Dichtungsbarriere (5), (5,) aus einem einlagigen, polymeren Film mit einer Mikrostärke zwischen 10 und 40 µm gebildet wird und welche in kontinuierlicher Weise der Länge nach in Form eines Bandes angeordnet wird, um eine Hülle zu bilden, wobei die Überlappung der Bahnen (8) parallel zu den Erzeugenden der weichen, rohrförmigen Struktur ist, wobei der einlagige Film mit Mikrostärke mit sich selbst versiegelbar ausgebildet wird, wobei sein Verschluß durch das dichte Übereinanderlegen seiner Flächen an der Oberfläche der Ummantelung sichergestellt wird und wobei die Überlappung der Bahnen (8) über eine Umfangslänge zumindest gleich dem Wert des Nenndurchmessers der weichen, rohrförmigen Struktur ist und im wesentlichen gleich dem Fünfhundertfachen der Dicke des einlagigen Films mit Mikrostärke ausgeführt wird, wobei durch eine einzige thermische Endbehandlung die innige Verbindung aller die weiche, rohrförmige Struktur bildenden Elemente sichergestellt wird.

2. Verfahren zur Herstellung einer weichen, rohrförmigen Struktur nach Anspruch 1, dadurch gekennzeichnet, daß der einlagige Film mit Mikrostärke, welcher eine Dichtungsbarriere (5') bildet, kontinuierlich auf der freien Oberfläche des Innenrohres (2) angeordnet wird, wobei er dadurch die Innenauskleidung (6) der weichen, rohrförmigen Struktur bildet.

3. Verfahren zur Herstellung einer weichen, rohrförmigen Struktur nach Anspruch 1, dadurch gekennzeichnet, daß der einlagige Film mit Mikrostärke kontinuierlich zwischen einer Innenauskleidung (6) und einem Verbindungsrohr (7) angeordnet wird, deren Gesamtheit das Innenrohr (2) ausbildet.

4. Verfahren zur Herstellung einer weichen, rohrförmigen Struktur nach Anspruch 3, dadurch gekennzeichnet, daß die Innenauskleidung (6) und das Verbindungsrohr (7) im wesentlichen die gleiche Dicke aufweisen, wobei der einlagige Film mit Mikrostärke im Bereich der halben Dicke des Innenrohres (2) angeordnet wird.

5. Weiche, rohrförmige Struktur, welche in Übereinstimmung mit dem Verfahren nach einem der Ansprüche 1 bis 4 ausgeführt ist, dadurch gekennzeichnet, daß der einlagige Film mit Mikrostärke, welcher die Dichtungsbarriere (5), (5') bildet, aus Polyethylenterephthalat gebildet ist.

6. Weiche, rohrförmige Struktur, welche in Übereinstimmung mit dem Verfahren nach einem der Ansprüche 1 bis 4 ausgeführt ist, dadurch gekennzeichnet, daß der einlagige Film mit Mikrostärke, welcher die Dichtungsbarriere (5), (5') bildet, aus einem Chlorethylen-Polymer, wie etwa Polyvinylchlorid gebildet ist.

7. Weiches Rohr für den Transport von flüssigen oder gasförmigen Fluiden, umfassend eine Dichtungsbarriere (5) oder (5'), bestehend aus einem einlagigen, polymeren Film mit Mikrostärke, dadurch gekennzeichnet, daß das weiche Rohr eine Struktur entsprechend einem der Ansprüche 5 oder 6 aufweist.

8. Muffe zur Kompensation der Dilatation für industrielle Kanalisationen, umfassend eine Dichtungsbarriere (5) oder (5'), bestehend aus einem einlagigen, polymeren Film mit Mikrostärke, dadurch gekennzeichnet, daß die Muffe zur Kompensation der Dilatation eine Struktur entsprechend einem der Ansprüche 5 oder 6 aufweist.
